# EUROPEAN PATENT APPLICATION

(11) **EP 3 692 807 A1**
(43) Date of publication of application: **12.08.2020**
(21) Application number: 18864456.1
(22) Date of filing: 10.09.2018
(51) Int. Cl.: A23L 5/42, A23L 5/43, A23L 5/44, A23L 29/231, A23L 29/244, A23L 29/256, A23L 29/269

(54) **METHOD FOR COLORING GEL-LIKE FOOD**

(30) Priority: 05.10.2017 JP 2017195153
(71) Applicant: Fuji Oil Holdings Inc., Izumisano-shi, Osaka 598-8540 (JP)
(72) Inventor: NAGANAWA, Shogo, Izumisano-shi Osaka 598-8540 (JP); HASEGAWA, Yoshinori, Izumisano-shi Osaka 598-8540 (JP)
(74) Representative: Becker, Eberhard
(86) International application number: PCT/JP2018/033359
(87) International publication number: WO 2019/069627

(57) **Abstract**

The present invention addresses the problem of providing a method for coloring a surface of a gel-like food in a simple manner. The present invention has been made as a result of finding that it is possible to beautifully color a surface of a gel-like food by providing divalent metal ions or metal ions having a greater valence on the surface of the gel-like food and by applying thereto an aqueous solution containing a pigment, as well as a gelling agent that reacts with the divalent metal ions or the metal ions having a greater valence and causes gelation. To provide the divalent metal ions or the metal ions having a greater valence on the surface of the gel-like food, there are a method in which components that form the divalent metal ions or the metal ions having a greater valence are kneaded into the gel-like food itself and a method in which an aqueous solution containing the divalent metal ions or the metal ions having a greater valence is applied to the surface of the gel-like food.

## Description

### BACKGROUND

### Technical Field

The invention relates to a method for coloring the surface of a gel-like food.

### Description of Related Art

Agar, gelatin, konjac, etc. are known as gel-like foods. Kamaboko is also a gel-like food. Patent Document 1 and Patent Document 2 relate to the coloring of konjac. Kamaboko served with a wooden board is generally known as kamaboko with its surface colored red.

### Related Art

### Patent Documents

[Patent Document 1] Japanese Laid-Open No. 2004-194562
[Patent Document 2] Japanese Laid-Open No. H10-75723

### SUMMARY

### Problems to be Solved

The invention is to provide a method for coloring a surface of a gel-like food in a simple manner.

### Means for Solving the Problems

Patent Documents 1 and 2 provide disclosure in regard to the coloring of konjac as a whole, but do not disclose a method for coloring the surface of konjac. For the variety of gel-like foods, besides the coloring of the gel-like foods themselves, a method for coloring the surface beautifully is also required. The inventors have conducted intensive studies and found that, for a gel-like food that has metal ions having a valence of 2 or more on the surface, the surface of the gel-like food can be beautifully colored by applying thereto an aqueous solution containing a pigment and a gelling agent, which reacts with the metal ions having a valence of 2 or more and causes gelation, and completed the invention.

That is, the invention relates to:
(1) a coloring method of coloring a surface of a gel-like food, performed by applying an aqueous solution containing a pigment and a gelling agent, which reacts with metal ions having a valence of 2 or more and causes gelation, to the gel-like food with the metal ions having a valence of 2 or more on the surface;
(2) the coloring method of coloring the surface of the gel-like food according to (1), wherein the gel-like food with the metal ions having a valence of 2 or more on the surface is obtained by kneading the metal ions having a valence of 2 or more into the gel-like food;
(3) the coloring method of coloring the surface of the gel-like food according to (1), wherein the gel-like food with the metal ions having a valence of 2 or more on the surface is obtained by applying an aqueous solution containing metal ions having a valence of 2 or more to the surface of the gel-like food;
(4) the coloring method according to (1), wherein the metal ions having a valence of 2 or more are at least one selected from calcium ions, magnesium ions, iron ions, and aluminum ions;
(5) the coloring method according to (2), wherein the metal ions having a valence of 2 or more are at least one selected from calcium ions, magnesium ions, iron ions, and aluminum ions;
(6) the coloring method according to (3), wherein the metal ions having a valence of 2 or more are at least one selected from calcium ions, magnesium ions, iron ions, and aluminum ions;
(7) the coloring method according to (1), wherein the gelling agent, which reacts with the metal ions having a valence of 2 or more and causes gelation, is at least one selected from alginic acid, pectin, and gellan gum;
(8) the coloring method according to (2), wherein the gelling agent, which reacts with the metal ions having a valence of 2 or more and causes gelation, is at least one selected from alginic acid, pectin, and gellan gum;
(9) the coloring method according to (3), wherein the gelling agent, which reacts with the metal ions having a valence of 2 or more and causes gelation, is at least one selected from alginic acid, pectin, and gellan gum;
(10) the coloring method according to (4), wherein the gelling agent, which reacts with the metal ions having a valence of 2 or more and causes gelation, is at least one selected from alginic acid, pectin, and gellan gum;
(11) the coloring method according to (5), wherein the gelling agent, which reacts with the metal ions having a valence of 2 or more and causes gelation, is at least one selected from alginic acid, pectin, and gellan gum;
(12) the coloring method according to (6), wherein the gelling agent, which reacts with the metal ions having a valence of 2 or more and causes gelation, is at least one selected from alginic acid, pectin, and gellan gum;
(13) the coloring method according to any one of (1) to (12), wherein the gel-like food contains glucomannan;
(14) a production method of producing a colored gel-like food, comprising coloring a surface by the method according to any one of (1) to (12);
(15) a gel-like food, having a structure in which a gel of a material different from the gel-like food and containing a pigment is attached to a surface of the gel-like food, and the gel-like food having a colored appearance;
(16) the gel-like food according to (15), wherein the material of the gel containing the pigment is at least one selected from alginic acid, pectin, and gellan gum; and
(17) the gel-like food according to (15) or (16), wherein the gel-like food contains glucomannan.

In other words, the invention relates to:
(21) a coloring method of coloring a surface of a gel-like food, performed by applying an aqueous solution containing a pigment and a gelling agent, which reacts with metal ions having a valence of 2 or more and causes gelation, to the gel-like food with the metal ions having a valence of 2 or more on the surface;
(22) the coloring method of coloring the surface of the gel-like food according to (21), wherein the gel-like food with the metal ions having a valence of 2 or more on the surface is obtained by kneading the metal ions having a valence of 2 or more into the gel-like food;
(23) the coloring method of coloring the surface of the gel-like food according to (21), wherein the gel-like food with the metal ions having a valence of 2 or more on the surface is obtained by applying an aqueous solution containing metal ions having a valence of 2 or more to the surface of the gel-like food;
(24) the coloring method according to any one of (21) to (23), wherein the metal ions having a valence of 2 or more are at least one selected from calcium ions, magnesium ions, iron ions, and aluminum ions;
(25) the coloring method according to any one of (21) to (24), wherein the gelling agent, which reacts with the metal ions having a valence of 2 or more and causes gelation, is at least one selected from alginic acid, pectin, and gellan gum;
(26) the coloring method according to any one of (21) to (25), wherein the gel-like food contains glucomannan;
(27) the coloring method according to any one of (21) to (26), wherein the pigment is at least one selected from a carotenoid pigment, a quinone pigment, an anthocyanin pigment, a flavonoid pigment, a porphyrin pigment, a betacyanine pigment, an azaphylon pigment, and a tar pigment;
(28) a production method of producing a colored gel-like food, comprising coloring a surface by the method according to any one of (21) to (27);
(29) a gel-like food, having a structure in which a gel of a material different from the gel-like food and containing a pigment is attached to a surface of the gel-like food, and the gel-like food having a colored appearance;
(30) the gel-like food according to (29), wherein the material of the gel containing the pigment is at least one selected from alginic acid, pectin, and gellan gum; and
(31) the gel-like food according to (29) or (30), wherein the gel-like food contains glucomannan.

### Effects

According to the invention, the surface of the gel-like food can be beautifully colored in a simple manner.

### DESCRIPTION OF THE EMBODIMENTS

The invention relates to a method that can beautifully color a surface of a gel-like food. Here, whether the gel-like food itself, that is, the inside, is colored is irrelevant to the invention. Of course, when the entire gel-like food including the inside is colored, the surface may also appear to be colored, but such a situation is not referred to as "coloring the surface of the gel-like food" described in the invention. The situation of coloring the surface of the gel-like food described in the invention includes, for example, coloring the surface of a gel-like food that is based on the color white and imitates an octopus to resemble octopus skin, or coloring the surface of a gel-like food that imitates a shrimp red to look like a real shrimp.

The gel-like food referred to in the invention is a food having gel properties. Specifically, the gel-like food can be agar, gelatin, konjac, tofu, and kamaboko besides natural octopus, shrimp, fish, and meat, more preferably agar, gelatin, and konjac, and even more preferably konjac. Konjac is a gel-like food mainly composed of glucomannan. In addition, the konjac includes those that have been added with starch, etc. separately to adjust the texture. By applying the invention to the desired gel-like food, the surface of the gel-like food can be beautifully colored.

Since the gel-like food contains a lot of moisture, it is often difficult to color only the surface of the gel-like food beautifully. The invention provides a method that can beautifully color the surface of the gel-like food even in such a situation.

The metal ions having a valence of 2 or more referred to in the invention can be calcium ions, magnesium ions, iron ions, and aluminum ions, and more preferably calcium ions. Because of the presence of appropriate metal ions having a valence of 2 or more, the surface of the gel-like food can be beautifully colored.

In the coloring method of the invention, metal ions having a valence of 2 or more need to be present on the surface of the gel-like food. To make metal ions having a valence of 2 or more present on the surface of the gel-like food, the following two methods are typically considered.

### 1. Method of kneading metal ions having a valence of 2 or more into the gel-like food

Metal ions having a valence of 2 or more can be provided on the surface of the gel-like food by kneading metal ions having a valence of 2 or more when preparing the gel-like food. In addition, when the metal ions are kneaded, even if the metal ions are kneaded in the state of salt or alkali, it may be expressed as "kneading metal ions having a valence of 2 or more" in the invention. For example, if the gel-like food is a food mainly composed of glucomannan such as konjac, since calcium hydroxide is often used as the alkali agent used when coagulating the glucomannan, the food can be used as "the gel-like food that has metal ions having a valence of 2 or more on the surface" of the invention without separately kneading metal ions having a valence of 2 or more. This method is advantageous mainly when it is desired to color a relatively wide range. However, metal ions having a valence of 2 or more present in the entire gel-like food may affect the flavor.

### 2. A method of applying an aqueous solution containing metal ions having a valence of 2 or more to the surface of the gel-like food

In this method, an aqueous solution containing metal ions having a valence of 2 or more is applied to the portion that is desired to be colored with a brush or a spray. In addition, it can also be performed by immersing the gel-like food in the aqueous solution containing metal ions having a valence of 2 or more. When it is desired to color the gel-like food partially, the aqueous solution can be applied to only the portion that is desired to be colored with a brush. In addition, since the absolute amount of the metal ions having a valence of 2 or more is small, the influence on flavor is also limited. For example, in the case of a calcium chloride aqueous solution, the concentration of the aqueous solution containing metal ions having a valence of 2 or more to be applied is about 1% by mass.

In the coloring method according to the invention, a gelling agent that reacts with the metal ions having a valence of 2 or more and causes gelation is used as the gelling agent that coexists with a pigment in the aqueous solution containing the pigment. Specifically, the gelling agent can be alginic acid, pectin, and gellan gum, and more preferably alginic acid. The pectin is LM pectin.

Moreover, various pigments can be used as the pigment to be used. Specifically, the pigment can be carotenoid pigment, quinone pigment, anthocyanin pigment, flavonoid pigment, porphyrin pigment, betacyanine pigment, azaphylon pigment, and tar pigment, and more preferably carotenoid pigment. By using an appropriate gelling agent and an appropriate pigment, the surface of the gel-like food can be beautifully colored.

In the coloring process, the aqueous solution containing the gelling agent that reacts with metal ions having a valence of 2 or more and causes gelation, and a pigment is prepared. Then, as an example, coloring is performed on the portion where the above-described aqueous solution containing metal ions having a valence of 2 or more is applied. For example, when alginic acid is used as the gelling agent that reacts with metal ions having a valence of 2 or more and causes gelation, since the alginic acid rapidly reacts with the metal ions having a valence of 2 or more and causes gelation, a gel layer including the pigment is formed on the portion where the aqueous solution containing the metal ions having a valence of 2 or more is applied, and the gel-like food is beautifully colored. Embodiments are described hereinafter.

### Embodiments

### Study 1 Preparation of gel-like food

A food imitating a shrimp was used as the gel-like food to be used in the embodiment. The formulation was in accordance with Table 1 and the preparation method was in accordance with the "shrimp-like food preparation method".

**Table 1 Formulation**

| | Sample 1 |
|---|---|
| Konjac powder | 2.78 |
| Cellulose preparation | 2.78 |
| High-amylose corn starch | 5.55 |
| Alkali agent | 0.13 |
| Processed starch | 0.99 |
| Water | 87.77 |
| Total | 100.00 |

| | |
|---|---|
| (The unit of formulation is % by mass.) | |

- "RHEOLEX RS" manufactured by Shimizu Chemical was used as the konjac powder.
- The cellulose preparation used was "Crystalline Cellulose Preparation Neocel C91" manufactured by MC Food Specialties.
- "High-amylose corn starch (HS-7)" manufactured by J-Oil Mills, Inc. was used as the high-amylose corn starch.
- Sodium carbonate was used as the alkali agent.
- "Neotrust W-300" manufactured by J-Oil Mills, Inc. was used as the processed starch.

### "Shrimp-like food preparation method"

1. Raw materials other than the alkali agent were mixed with a cutter mixer for 10 seconds.
2. The alkali agent was added.
3. The mixture was further mixed with the cutter mixer for 10 seconds.
4. A squeezing bag was used to squeeze out the mixture with a diameter of about 10 mm to produce a shrimp-like shape.
5. Steaming and heating were performed at 95°C for 10 minutes.

### Study 2 Coloring study

Coloring was performed using each pigment aqueous solution in Table 2. Whether the calcium chloride aqueous solution has been applied before coloring was indicated as "Yes" or "No". A 1.32% by mass solution of calcium chloride dihydrate was used as the calcium chloride aqueous solution. For each of the gel-like foods prepared in Study 1, the dorsal portion of the shrimp-like shape was applied with the calcium chloride aqueous solution according to the conditions in Table 2. Then, a pigment aqueous solution prepared under each condition was applied. The obtained colored product was evaluated according to the "appearance evaluation method of shrimp-like food". The results were shown in Table 3.

**Table 2 Formulation and condition**

| | | Comparative Example 2-1 | Comparative Example 2-2 | Comparative Example 2-3 | Comparative Example 2-4 | Embodiment 2-1 |
|---|---|---|---|---|---|---|
| Calcium chloride aqueous solution has been applied? | | No | No | Yes | No | Yes |
| Pigment aqueous solution | Pigment 1 | - | 1 | 1 | 1 | 1 |
| | Sodium alginate | - | - | - | 1 | 1 |
| | Water | 100 | 99 | 99 | 98 | 98 |
| Total | | 100 | 100 | 100 | 100 | 100 |

| | | | | | | |
|---|---|---|---|---|---|---|
| (The unit of formulation is % by mass.) | | | | | | |

- "KIMICA Argin I-3K" manufactured by KIMICA Corporation was used as the sodium alginate.
- "Paprika Base No35792" manufactured by San-Ei Gen F.F.I., Inc. was used as the pigment 1.

### "Appearance evaluation method of shrimp-like food"

A 3 to 4 cm long edible shrimp (without shell) boiled for 1 minute was used as the comparison target, and the product was evaluated according to the following criteria by a panel of five panelists.
5 points - the product shows the same color tone as the comparison target.
4 points - although the product is slightly different from the comparison target, there is almost no difference.
3 points - the product is different from the comparison target, but judged to be acceptable.
2 points - the product is very different from the comparison target and is not acceptable.
1 point - the product is not evaluated because it is not colored.

Three or more points were judged to be acceptable.

**Table 3 Result**

| | Comparative Example 2-1 | Comparative Example 2-2 | Comparative Example 2-3 | Comparative Example 2-4 | Embodiment 2-1 |
|---|---|---|---|---|---|
| Appearance evaluation result | 1 | 2 | 2 | 2 | 5 |

### Consideration

As shown in Table 3, the sample colored under the condition satisfying the requirement could be colored with an appearance comparable to a real shrimp.

### Study 3 Study with various pigments

Coloring was performed using each pigment aqueous solution in Table 4. The conditions were the same as in Study 2. Evaluation was performed according to the following "evaluation of coloring condition". The results were shown in Table 5.

**Table 4 Formulation**

| | | Embodiment 3-1 | Embodiment 3-2 | Embodiment 3-3 | Embodiment 3-4 | Embodiment 3-5 | Comparative Example 3-1 | Comparative Example 3-2 | Comparative Example 3-3 | Comparative Example 3-4 | Comparative Example 3-5 |
|---|---|---|---|---|---|---|---|---|---|---|---|
| Calcium chloride aqueous solution has been applied? | | Yes | Yes | Yes | Yes | Yes | No | Yes | No | No | Yes |
| Pigment aqueous solution | Pigment 2 | 1 | - | - | - | - | - | - | - | - | - |
| | Pigment 3 | - | 1 | - | - | - | 1 | 1 | 1 | - | - |
| | Pigment 4 | - | - | 1 | - | - | - | - | - | - | - |
| | Pigment 5 | - | - | - | 1 | - | - | - | - | - | - |
| | Pigment 6 | - | - | - | - | 1 | - | - | - | 1 | - |
| | Sodium alginate | 1 | 1 | 1 | 1 | 1 | 1 | - | - | 1 | 1 |
| | Water | 98 | 98 | 98 | 98 | 98 | 98 | 99 | 99 | 98 | 99 |
| Total | | 100 | 100 | 100 | 100 | 100 | 100 | 100 | 100 | 100 | 100 |

| | | | | | | | | | | | |
|---|---|---|---|---|---|---|---|---|---|---|---|
| (The unit of formulation is % by mass.) | | | | | | | | | | | |

- "KIMICA Argin I-3K" manufactured by KIMICA Corporation was used as the sodium alginate.
- "SAN RED MR" manufactured by San-Ei Gen F.F.I., Inc. was used as the pigment 2.
- "SAN YELLOW No. 2SFU" manufactured by San-Ei Gen F.F.I., Inc. was used as the pigment 3.
- "ART BLUE GBF" manufactured by San-Ei Gen F.F.I., Inc. was used as the pigment 4.
- "LYCOPENE BASE No. 34824" manufactured by San-Ei Gen F.F.I., Inc. was used as the pigment 5.
- "Paprika Base No35792" manufactured by San-Ei Gen F.F.I., Inc. was used as the pigment 6.

### "Evaluation of coloring condition"

Whether sample 1 is sufficiently colored was evaluated according to the following criteria by a panel of five panelists.
○ - the product is colored without color fading or color flow.
Δ - the product has color flow, penetration, etc., and the coloring is insufficient.
× - the product is hardly colored.
○ was judged to be acceptable.

**Table 5 Result**

| | Embodiment 3-1 | Embodiment 3-2 | Embodiment 3-3 | Embodiment 3-4 | Embodiment 3-5 | Comparative Example 3-1 | Comparative Example 3-2 | Comparative Example 3-3 | Comparative Example 3-4 | Comparative Example 3-5 |
|---|---|---|---|---|---|---|---|---|---|---|
| Color tone Evaluation | ○ | ○ | ○ | ○ | ○ | Δ | × | × | × | × |

### Consideration

• It was confirmed that, regardless of the type of pigment, the surface of the gel-like food can be beautifully colored by a combination of the aqueous solution that contains the metal ions having a valence of 2 or more, and a material that causes gelation with the metal ions having a valence of 2 or more.

### Study 4 Study of gelling agent

The gelling agent added to the pigment aqueous solution was studied. A test was performed under the same conditions as in Study 3 according to the formulation in Table 6. Further, evaluation was performed in the same manner as in Study 3, and the results were shown in Table 7.

**Table 6 Formulation**

| | | Embodiment 4-1 | Embodiment 4-2 | Comparative Example 4-1 |
|---|---|---|---|---|
| Calcium chloride aqueous solution has been applied? | | Yes | Yes | Yes |
| Pigment aqueous solution | Pigment 6 | 1 | 1 | 1 |
| | Sodium alginate | 1 | - | - |
| | Pectin | - | 1 | - |
| | Starch | - | - | 1 |
| | Water | 98 | 98 | 98 |
| Total | | 100 | 100 | 100 |

| | | | | |
|---|---|---|---|---|
| (The unit of formulation is % by mass.) | | | | |

- "Paprika Base No35792" manufactured by San-Ei Gen F.F.I., Inc. was used as the pigment 6.
- "KIMICA Argin I-3K" manufactured by KIMICA Corporation was used as the sodium alginate.
- "LM-104AS-J" manufactured by CPKelco was used as the pectin.
- "Neotrust W-300" manufactured by J-Oil Mills, Inc. was used as the starch.

**Table 7 Result**

| | Embodiment 4-1 | Embodiment 4-2 | Comparative Example 4-1 |
|---|---|---|---|
| Color tone Evaluation | ○ | ○ | × |

### Consideration

As shown in Table 7, when a gelling agent that causes gelation with metal ions having a valence of 2 or more was used, favorable coloring could be achieved, but a gelling agent that did not cause gelation (here, refers to starch) did not provide good coloring.

### Study 5 Regarding "method of kneading metal ions having a valence of 2 or more into the gel-like food"

A gel-like food was prepared in accordance with the formulation in Table 8. The preparation method was in accordance with the "gel-like food preparation method 2".

**Table 8 Formulation**

| | | Sample 5-1 | Sample 5-2 |
|---|---|---|---|
| Konjac powder | | 2.78 | 2.78 |
| Cellulose preparation | | 2.78 | 2.78 |
| High-amylose starch | | 5.55 | 5.55 |
| Alkali agent | Sodium carbonate | 0.13 | - |
| | Calcined shell calcium | - | 0.033 |
| Processed starch | | 0.99 | 0.99 |
| Water | | 87.77 | 87.867 |
| Total | | 100.00 | 100.00 |

| | | | |
|---|---|---|---|
| (The unit of formulation is % by mass.) | | | |

- "RHEOLEX RS" manufactured by Shimizu Chemical was used as the konjac powder.
- The cellulose preparation used was "Crystalline Cellulose Preparation Neocel C91" manufactured by MC Food Specialties.
- "High-amylose corn starch (HS-7)" manufactured by J-Oil Mills, Inc. was used as the high-amylose corn starch.
- "Neotrust W-300" manufactured by J-Oil Mills, Inc. was used as the processed starch.
- "Calcined Shell Calcium KM" manufactured by Kawai Materials was used as the calcined shell calcium. The calcium concentration in the dough was 0.021% by mass, and it was considered that the same amount of calcium was also present on the surface of the gel-like food.

### "Gel-like food preparation method 2"

1. Raw materials other than the alkali agent were mixed with a cutter mixer for 10 seconds.
2. The alkali agent was added.
3. The mixture was further mixed with the cutter mixer for 10 seconds.
4. A squeezing bag was used to squeeze out the mixture with a diameter of about 10 mm to produce a shrimp-like shape.
5. The gel surface was colored.
6. Steaming and heating were performed at 95°C for 10 minutes.

### Study 6 Coloring study

Coloring study was performed on the sample prepared in Study 5 using each sample in Table 9. The method was in accordance with the "coloring test method" described hereinafter. Evaluation of the coloring was in accordance with the "coloring evaluation method" described hereinafter. The results were shown in Table 10.

**Table 9 Coloring test**

| | | Comparative Example 5-1 | Comparative Example 5-2 | Comparative Example 5-3 | Embodiment 5-1 |
|---|---|---|---|---|---|
| Sample 5-1 | | ○ | ○ | - | - |
| Sample 5-2 | | - | - | ○ | ○ |
| Pigment aqueous solution | Pigment | 1 | 1 | 1 | 1 |
| | Sodium alginate | 1 | - | - | 1 |
| | Water | 98 | 99 | 99 | 98 |
| Total | | 100 | 100 | 100 | 100 |

| | | | | | |
|---|---|---|---|---|---|
| (The unit of formulation is % by mass.) | | | | | |

- "Paprika Base No35792" manufactured by San-Ei Gen F.F.I., Inc. was used as the pigment.
- "KIMICA Argin I-3K" manufactured by KIMICA Corporation was used as the sodium alginate.

### "Coloring test method"

1. A pigment aqueous solution was prepared according to the formulation of "pigment aqueous solution" in Table 9.
2. Each pigment aqueous solution was applied on the samples 5-1 to 5-2 designated in the embodiment and comparative examples to perform a coloring test.

### "Coloring evaluation method"

With the colored samples obtained in embodiment 3-5 as the comparison target, evaluation was performed according to the following criteria by a panel of three panelists.
○ - the product is colored without color fading or color flow.
Δ - the product has color flow, penetration, etc., and the coloring is insufficient.
× - the product is hardly colored.
○ was judged to be acceptable.

**Table 10 Result**

| | Comparative Example 5-1 | Comparative Example 5-2 | Comparative Example 5-3 | Embodiment 5-1 |
|---|---|---|---|---|
| Color tone Evaluation | × | × | × | ○ |

### Consideration

As shown in Table 10, by performing the method according to the invention, the gel-like food containing metal ions having a valence of 2 or more on the surface could be colored favorably. However, when metal ions having a valence of 2 or more were not present on the surface, coloring could not be achieved.

## Claims

1. A coloring method of coloring a surface of a gel-like food, performed by applying an aqueous solution containing a pigment and a gelling agent, which reacts with metal ions having a valence of 2 or more and causes gelation, to the gel-like food with the metal ions having a valence of 2 or more on the surface.

2. The coloring method of coloring the surface of the gel-like food according to claim 1, wherein the gel-like food with the metal ions having a valence of 2 or more on the surface is obtained by kneading the metal ions having a valence of 2 or more into the gel-like food.

3. The coloring method of coloring the surface of the gel-like food according to claim 1, wherein the gel-like food with the metal ions having a valence of 2 or more on the surface is obtained by applying an aqueous solution containing metal ions having a valence of 2 or more to the surface of the gel-like food.

4. The coloring method according to claim 1, wherein the metal ions having a valence of 2 or more are at least one selected from calcium ions, magnesium ions, iron ions, and aluminum ions.

5. The coloring method according to claim 2, wherein the metal ions having a valence of 2 or more are at least one selected from calcium ions, magnesium ions, iron ions, and aluminum ions.

6. The coloring method according to claim 3, wherein the metal ions having a valence of 2 or more are at least one selected from calcium ions, magnesium ions, iron ions, and aluminum ions.

7. The coloring method according to claim 1, wherein the gelling agent, which reacts with the metal ions having a valence of 2 or more and causes gelation, is at least one selected from alginic acid, pectin, and gellan gum.

8. The coloring method according to claim 2, wherein the gelling agent, which reacts with the metal ions having a valence of 2 or more and causes gelation, is at least one selected from alginic acid, pectin, and gellan gum.

9. The coloring method according to claim 3, wherein the gelling agent, which reacts with the metal ions having a valence of 2 or more and causes gelation, is at least one selected from alginic acid, pectin, and gellan gum.

10. The coloring method according to claim 4, wherein the gelling agent, which reacts with the metal ions having a valence of 2 or more and causes gelation, is at least one selected from alginic acid, pectin, and gellan gum.

11. The coloring method according to claim 5, wherein the gelling agent, which reacts with the metal ions having a valence of 2 or more and causes gelation, is at least one selected from alginic acid, pectin, and gellan gum.

12. The coloring method according to claim 6, wherein the gelling agent, which reacts with the metal ions having a valence of 2 or more and causes gelation, is at least one selected from alginic acid, pectin, and gellan gum.

13. The coloring method according to any one of claims 1 to 12, wherein the gel-like food contains glucomannan.

14. A production method of producing a colored gel-like food, comprising coloring a surface by the method according to any one of claims 1 to 12.

15. A gel-like food, having a structure in which a gel of a material different from the gel-like food and containing a pigment is attached to a surface of the gel-like food, and the gel-like food having a colored appearance.

16. The gel-like food according to claim 15, wherein the material of the gel containing the pigment is at least one selected from alginic acid, pectin, and gellan gum.

17. The gel-like food according to claim 15 or 16, wherein the gel-like food contains glucomannan.
